**Europäisches Patentamt**

**European Patent Office**

**Office européen des brevets**

(11) Veröffentlichungsnummer: **0 033 870**
**B1**

(12) **EUROPÄISCHE PATENTSCHRIFT**

(45) Veröffentlichungstag der Patentschrift: **07.05.86**

(51) Int. Cl.⁴: $G\ 01\ S\ 17/88$, $G\ 01\ N\ 21/53$

(21) Anmeldenummer: **81100450.6**

(22) Anmeldetag: **22.01.81**

(54) Verfahren zur Messung der Schrägsichtweite.

(30) Priorität: **26.01.80 DE 3002791**

(43) Veröffentlichungstag der Anmeldung:
**19.08.81 Patentblatt 81/33**

(45) Bekanntmachung des Hinweises auf die
Patenterteilung:
**07.05.86 Patentblatt 86/19**

(84) Benannte Vertragsstaaten:
**FR GB NL SE**

(56) Entgegenhaltungen:
FR-A-1 589 684
FR-A-2 248 520
GB-A- 794 472
US-A-3 519 354
US-A-3 782 824

APPLIED OPTICS, Band 17, Nr. 2, 15. Januar
1978, New York, US, E.R. MURRAY et al.:
"Single-ended measurement of infrared
extinction using lidar", Seiten 296-299

**Die Akte enthält technische Angaben, die nach
dem Eingang der Anmeldung eingereicht
wurden und die nicht in dieser Patentschrift
enthalten sind.**

(73) Patentinhaber: **Deutsche Forschungs- und
Versuchsanstalt für Luft- und Raumfahrt e.V.
Linder Höhe Postfach 90 60 58
D-5000 Köln 90 (DE)**

(72) Erfinder: **Werner, Christian, Dipl.Phys.
Dachstrasse 36
D-8000 München 60 (DE)**
Erfinder: **Klier, Michael
Kiefernstrasse 86
Puchheim (DE)**

(74) Vertreter: **Endlich, Fritz, Dipl.-Phys.
Postfach 1326 Blumenstrasse 8
D-8034 Germering (DE)**

(56) References cited:
AGARD Conference Proceedings, Nr. 50,
Februar 1970, Cowes, GB, E.T. HILL "Lasers for
measuring slant visual range", Seiten 35 - 35-10

APPLIED OPTICS, Band 14, Nr. 12, Dezember
1975, New York, US, A. COHEN: "Horizontal
visibility and the measurement of atmospheric
optical depth of lidar", Seiten 2878-2882

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**0 033 870**

(56) References cited:

**Firmen-Druckschrift der DFVLR "Lidar für Umweltschutzaufgaben", 1979**

## Beschreibung

Die Erfindung betrifft ein Verfahren zur Messung der Schrägsichtweite entsprechend dem Oberbegriff des Patentanspruchs.

Bei der immer mehr zunehmenden Verkehrsdichte auf dem Land und in der Luft, und den immer größer werdenden Geschwindigkeiten, ist es oft von lebenswichtiger Bedeutung, über die herrschenden Sichtverhältnisse Bescheid zu wissen. Als Beispiel sei hierfür die Nebelwarnung auf der Autobahn angeführt. An Stellen, an denen sich bekanntermaßen leicht Nebel bildet, kann man Sichtmeßgeräte fest installieren, die den Verkehrsfluß abhängig von der Sichtweite steuern können.

Die Luftfahrt leidet Jahr für Jahr darunter, daß Nebel an den Flughäfen die Starts und Langungen erschwert oder unmöglich macht. In dieser Situation ist es besonders wichtig, die längs der Start- und Landewege herrschenden Sichtverhältnisse zu kennen und vorauszusehen. Technische Hilfsmittel dafür sind bisher üblicherweise Transmissiometer und Leuchtdichtemeßgeräte am Boden, mit deren Hilfe die sogenannte Runway Visual Range (RVR) ermittelt wird. Zusätzlich müßte man eigentlich den Sichtverlauf längs des Gleitpfades überwachen und die sogenannte Slant Visual Range (SVR) bestimmen.

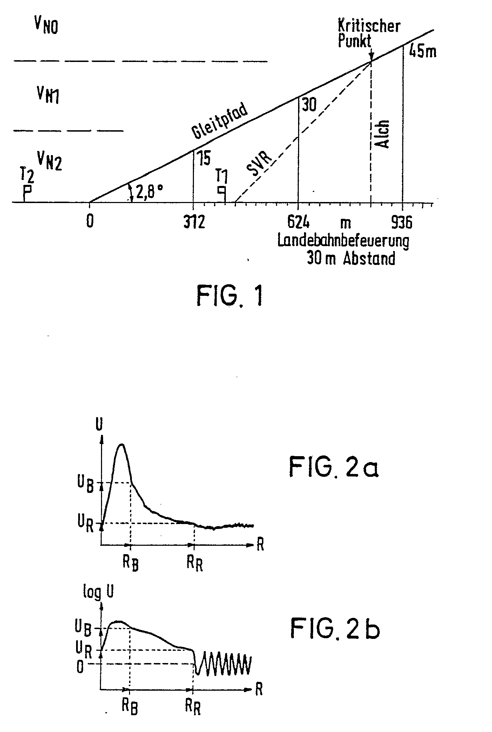

Fig. 1 verdeutlicht die geometrischen Bedingungen beim Landeanflug. Ein sich im Anflug auf dem Gleitpfad befindliches Flugzeug durchfliegt nacheinander die Horizontalsichtstufen $V_{N_0}$, $V_{N_1}$ und $V_{N_2}$. Vom Flughafen aus kann dem Piloten nur die Horizontalsicht $V_{N_2}$ über der Landebahn gemeldet werden, die mit einem Transmissometer zwischen den Punkten $T_1$ und $T_2$ gemessen wird. Für den Piloten, der verantwortlich für die sichere Landung ist, ist es in jedem Fall wichtiger, die Sicht entlang des Gleitpfades zu kennen.

Bei einem Anflug durch Wolken (z.B. $V_{N_1}<V_{N_0}$ und $V_{N_1}<V_{N_2}$) ist die Höhe der Wolkenuntergrenze und die Dicke dieser Wolkenschicht interessant. Die Bestimmung wird mit Ceilometern oder Wolkenhöhenmessern durchgeführt. Für den Fall des Bodennebels ($V_{N_2}<V_{N_1}$, $V_{N_0}$) muß wiederum die Höhe der Nebelobergrenze und die optische Homogenität bekannt sein, und in derartigen Situationen ist es für die Verantwortlichen außerordentlich schwierig, anhand von Zusatzinformationen, z.B. aus Ballonaufstiegen und einschlägiger Erfahrung, eine präzise Auskunft darüber zu geben, ob der anfliegende Pilot am kritischen Punkt (Fig. 1) mit Landebahnsicht rechnen kann, ob er auf ein Fehlanflugverfahren gefaßt sein muß oder ob die Sichtverhältnisse eine Landung sicher nicht zulassen. In derart kritischen Wettersituationen, die leider nicht selten sind, wäre eine laufende instrumentelle Überwachung der Schrägsichtweite von großem Vorteil.

Die Sichtweite läßt sich außer mit Transmissiometern auch mit Geräten bestimmen, die nur den Streukoeffizienten messen. Für die Bestimmung der schrägen Normsicht kann man theoretisch Transmissometerstrecken auf dem Gleitpfad erstellen. Die dabei notwendig werdenden Türme im Anflugbereich stellen aber in jedem Falle Gefahrenquellen dar. Der Einsatz von Fernmeßgeräten und hierbei der Laser-Radar- oder Lidar-Geräte erscheint hierbei zweckmäßig.

Bei diesem Verfahren ergibt die von den Aerosolteilchen zurückgestreute Energie einen charakteristischen Verlauf in Abhängigkeit von der Laufzeit des Laserpulses. Im empfangenen Signal sind die Eigenschaften der Aerosole, wie zum Beispiel deren Dichte, entlang des Laserstrahls charakterisiert. Setzt man vereinfachend eine streckenweise homogene Atmosphäre voraus, was mit einer konstanten Rückstreuung auf den entsprechenden Strecken verbunden wäre, ist der Kurventeil des Lidar-Signals durch das Produkt aus reziproker Entfernung im Quadrat und der Extinktion verursacht. Wegen der bekannten Beziehung von Sichtweite und Extinktion kann die Sichtweite entlang des Laserstrahls durch exakte Analyse des Lidar-Signals erhalten werden. Der Vorteil der Fernmeßtechnik ist die Unabhängigkeit von einer Meßrichtung; man kann auch entlang der in Fig. 1 gestrichelten Linie messen (SVR).

Die bisher bekannte genaueste Auswertemethode, die sogenannte Slope-Methode (Applied Optics 14 (1975), S. 2878—2882) erfordert einen großen elektronischen Aufwand der Signalspeicherung und der rechnerischen Bestimmung der Ausgleichsgeraden aus dem entfernungskorrigierten Signalverlauf. Damit wird die Neigung der Kurve bestimmt, die direkt die Extinktion angibt. Die praktische Einführung der Methode scheiterte an den notwendigen Personal- und Gerätekosten und an dem Anspruch, für den gesamten Sichtweitenbereich von 50 m bis 100 km gültig zu sein. Wenn man sich auf die für die Luftfahrt gefährlichen Sichtweiten unter 2000 m beschränkt, ist es zweckmäßiger, das für eine praktische Durchführung gut geeignete Verfahren der eingangs genannten Art (Firmen-Druckschrift der DFVLR "Lidar für Umweltschutzaufgaben", Ausgabe für Ausstellung "Laser 1979") zu verwenden, weil bei diesen 2-Punkt-Verfahren ein erheblich geringerer elektronischer Aufwand erforderlich ist. Bei diesem Verfahren wird als zweiter Stützpunkt ein Meßwert benötigt, der eine Aussage über die Größe der Rückstreuung in unmittelbarer Nähe des Empfängers ermöglicht. Der dabei erforderliche elektronische Aufwand zur Speicherung eines Spannungswerts und dessen Verrechnung mit der Reichweite des Signals ist im Vergleich zu der aufwendigen Slope-Methode verhältnismäßig gering. Der Erfindung liegt demgegenüber die Erkenntnis zugrunde, daß bei der praktischen Anwendung des 2-Punkt-Verfahrens die Schwierigkeit auftreten kann, daß inhomogenitäten im Signalverlauf zwischen dem ersten und zweiten Stützpunkt zu Fehlinterpretationen führen können.

Ein weiteres Verfahren, welches die Kostenprobleme löst, ist dagegen nur mit einer zusätzlichen unabhängigen Sichtmessung eindeutig. Die sogenannte Reichweitenmethode (DE—PS 26 06 318) benutzt das Erreichen der Detektierbarkeitsgrenze des Laserstrahls als Kriterium. Diese Reichweite des Signals kann bei guter Sicht, also geringem Aerosolgehalt und damit geringer Rückstreuung gleich sein der Reichweite des Signals bei Nebel, wo diese Reichweite durch die stärkere Extinktion erreicht wird. Die Unterscheidung kann dann nur durch eine weitere, unabhängige Messung der Sicht erfolgen.

Es ist deshalb Aufgabe der Erfindung, ein Verfahren für die Bestimmung der Schrägsichtweite zu schaffen, wofür einerseits geringerer elektronischer Aufwand erforderlich ist als bei der Slope-Methode, und bei dem andererseits Fehlinterpretation bei inhomogener Schichtung möglichst weitgehend vermieden werden sollen.

Diese Aufgabe wird bei einem Verfahren der eingangs genannten Art erfindungsgemäß durch den Gegenstand des Patentanspruchs gelöst.

Sind bei einer Messung unter zwei Elevationswinkeln die beiden Meßergebnisse verschieden, liegt eine Schichtung vor. Der Verlauf einer solchen Schichtung kann dann aus den Messungen unter verschiedenen Winkeln errechnet werden.

Anhand der Zeichnung soll die Erfindung beispielsweise näher erläutert werden. Es zeigen:

Fig. 1 eine grafische Darstellung zur Erläuterung der Bedingungen beim Landeanflug:

Fig. 2 eine grafische Darstellung zur Erläuterung des 2-Punkt-Verfahrens, wobei Fig. 2a ein linear und Fig. 2b ein logarithmisch verstärktes Signal betrifft;

Fig. 3 einen Logiklaufplan zur Erläuterung des Verfahrens bei Messung unter verschiedenen Winkeln gemäß der Erfindung; und

Fig. 4 ein Blockschaltbild der Signalverarbeitung.

Wie bereits erwähnt wurd, wird bei dem bekannten 2-Punkt-Verfahren eine Kombination mit dem Ziel verwendet, den Aufwand der exakten Lösungsmethode (Slope-Methode) zu reduzieren. Für die homogene Schichtung kommt man mit zwei Stützpunkten aus. Als 2. Stützpunkt benötigt man eine Aussage über die Größe der Rückstreuung in unmittelbarer Nähe des Empfängers, zum Beispiel die Signalspannung $U_B$ bei $R = R_B$ in 100 m. Man wird praktischerweise den willkürlichen Wert $U = U_R$ so wählen, daß er unabhängig von einer möglichen Verstärkungseinstellung wird. Dies erreicht man, wenn man annimmt, daß bei $U = U_R$ das Signal/Rauschverhältnis 1 wird, daß also das Signal im Empfängerrauschen verschwindet.

Im folgenden sollen die Genauigkeitsgrenzen des 2-Punkt-Verfahrens für inhomogene Schichtungen der realen Atmosphäre erläutert werden.

Fig. 2a zeigt zur Verdeutlichung des 2-Punkt-Verfahrens ein Signal, wie man es bei Benutzung linearer Verstärkung pro Laserpuls erhält.

Die $U/R^2$-Abhängigkeit ist deutlich zu erkennen. Man kann sich analog zur Slope-Methode zwei Punkte herausgreifen und erhält bei Benutzung der folgenden Gleichungen

$$U_R = A = \frac{K}{R_R^2} \cdot \beta_{MR} \tau_R^2$$

$$U_B = B = \frac{K}{R_B^2} \cdot \beta_{MB} \tau_B^2$$

mit $\beta_{MR}$, $\beta_{MB}$ als ortsabhängige Rückstreukoeffizienten und $\bar{\sigma}_R$, $\bar{\sigma}_B$ als ortsabhängige Transmissionen ($\tau = e^{-\sigma R}$)
K = Konstante
Unter der Annahme, daß

$$\beta_{MR} = \beta_{MB} = \bar{\beta}$$

$$\sigma_{MR} = \sigma_{MB} = \bar{\sigma}$$

für homogene Schichtung mit $\sigma_{MR}$, $\sigma_{MB}$ als ortsabhängige Streukoeffizienten der Partikel M ergibt sich eine Beziehung für die schräge Normsicht:

$$\frac{AR_R^2}{BR_B^2} = e^{-2\sigma(R_R - R_B)}$$

$$\sigma = \frac{1}{2(R_R - R_B)} \cdot \ln \frac{BR_B^2}{AR_R^2}$$

$$V_N = \frac{7.82 \cdot (R_R - R_B)}{\ln BR_B^2 - \ln AR_R^2} \qquad (A)$$

die 4 Meßgrößen enthält: die Meßspannung $U_B$ bei der Entfernung $R_B$ une die Meßspannung $U_R$ bei der Entfernung $R_R$.

Nimmt man nun die Reichweitenmethode hinzu mit $U_R$ als Rauschspannungswert, so hat man nur noch zwei meßgrößen zu betimmen: die Meßspannung $U_B$ bei der fest eingestellten Entfernung $R_B$ und die Rauschentfernung $R_R$ bei bekannter Rauschspannung $U_R$. Dieser Rauschspannungswert ist der einzige Unterschied zur Slope-Methode, wo irgendein Spannungswert bei der Entfernung R genommen wurde. Das Meßproblem bleibt die Messung der Entfernung $R_R$. Hierfür ist ein logarithmischer Verstärker in Abwandlung zu einer Torschaltung geeignet. Fig. 2b zeigt das logarithmisch verstärkte Signal. Bewirkt durch die gleiche Verstärkung für positive wie negative Spannungen wird bei Erreichen der Rauschspannung ein Nulldurchgang beim logarithmisch verstärkten Signal erfolgen. Die Messung der Rauschentfernung reduziert sich so zu einer bei Entfernungsmessern bekannten Start-Stop Zählung.

Berechnete Modellschichtungen zeigen die Grenzen der Reichweitenmethode. Mit einer

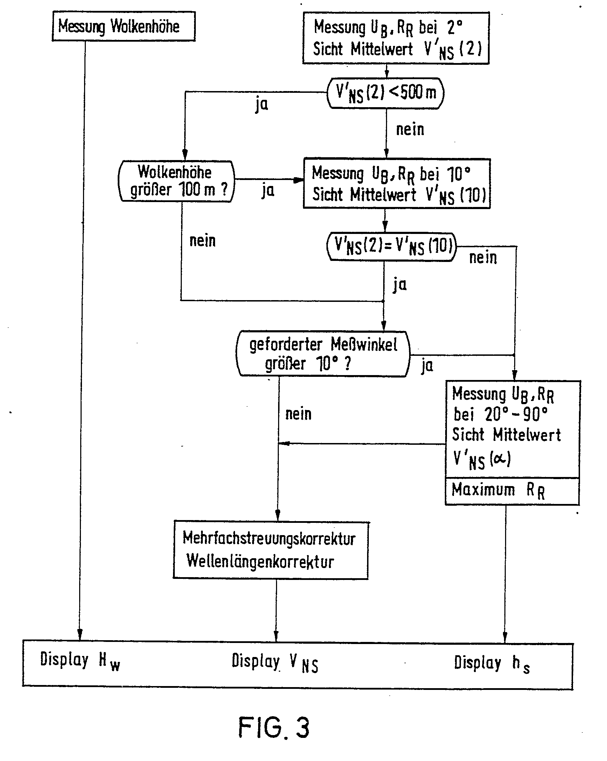

Zusatzmessung unter verschiedenen Elevationswinkeln können Fehlinterpretationen erfindungsgemäß ausgeschaltet werden. Das 2-Punkt-Verfahren setzt nämlich eine homogene Atmosphäre voraus. Nur dann ist die obige Beziehung (A) gültig. Bei der meist vorhandenen inhomogenen Schichtung der Atmosphäre kann man an dem Verlauf des Lidar-Signals die Schichtung erkennen und dementsprechend die Sichtweite abschnittsweise berechnen. Dies ist mit der Slope-Methode möglich. Um mit dem verringerten Aufwand des 2-Punkt-Verfahrens trotzdem auch für diese Fälle Aussagen zu erhalten, muß die möglicherweise vorhandene Schichtung durch Messung unter verschiedenen Erhebungswinkeln erfaßt werden. Sind bei Messung unter zwei Winkeln die beiden Meßergebnisse nach Gleichung (A) verschieden, liegt eine Schichtung vor. Fig. 3 zeigt ein bevorzugtes Ausführungsbeispiel eines Logiklaufplans.

Im Normalfall wird die Messung unter zwei Winkeln ausgeführt, die Meßwerte werden gemittelt, eine Sichtweite $V_2$ beziehungsweise $V_{10}$ wird bestimmt und beide Werte werden verglichen. Ist man nicht an einer Schichtung interessiert, reicht ein Wert $V_x$ mit der entsprechenden Umrechnung (Mehrfachstreuung, Wellenlänge) zum Display.

Will man eine Schichtung anzeigen, muß $V_2$ ungleich $V_{10}$ sein, man wird noch Messungen bis 90° durchführen, ein Maximum von $R_R$ bestimmen und die Inversionshöhe zusätzlich zum korrigierten Sichtweitenwert unter dem interessierenden Winkel anzeigen. Die Angabe der wahren Schrägsichtweite für den geforderten Winkel wird aus den Messungen unter verschiedenen Winkeln bestimmt. Sie hängt für den Piloten dann noch vom Luftlicht ab (path radiance).

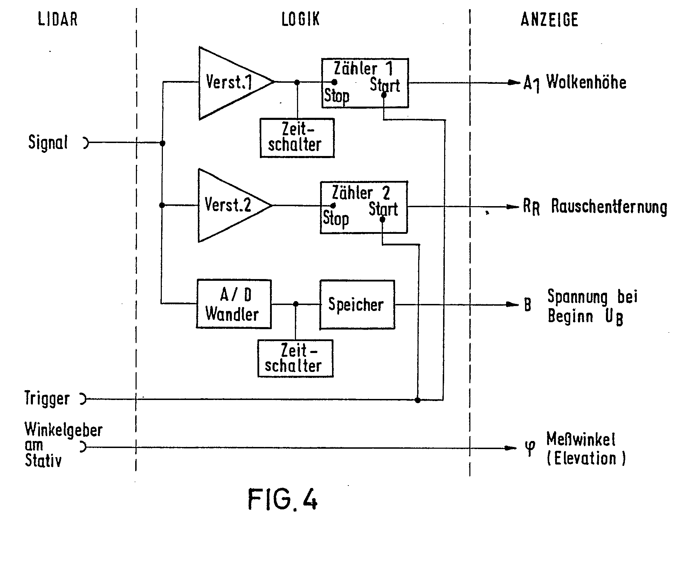

Fig. 4 zeigt das Blockschaltbild der Signalverarbeitung. Das Lidar-Signal kann für die Wolkenhöhenmessung mit dem bekannten Entfernungsmeßteil benutzt werden. Das Startsignal wird vom Laser-Trigger und das Stop-Signal wird vom Wolkenecho geliefert. Durch einen Zeitschalter ist es möglich, die 2. oder 3. Wolkenschicht anzumessen.

Für die Schrägsichtmessung wird die gleiche Entfernungsmessung mit dem Stop-Signal als Signal bei Null-Durchgang benutzt. Zusätzlich wird ein Wert des Lidar-Signals bei der über Zeitschalter vorwählbaren Entfernung $R_B$ gespeichert. Je nach Betriebsart werden dem Rechner die Werte der Wolkenhöhe oder die Werte $R_R$ und $U_B$ gegeben. Zusätzlich wird der Meßwinkel als Information zur Verfügung gestellt.

## Patentanspruch

Verfahren zur Messung der Schrägsichtweite, bei dem als Sender ein Impulslaser und als Empfänger für die an den Aerosolen rückgestreuten Laserimpulse eine Empfangsvorrichtung mit Fotodetektor benutzt wird, bei dem eine vorgegebene von den Eigenschaften der Aerosole abhängige Signalspannung ($U_R$) von empfangenen Laserimpulsen und die aus der Laufzeit der Laserumpulse ermittelte zugehörige Entfernung gemessen und als erster Stützpunkt verwendet wird und bei dem zur Bestimmung der Reichweite des Laserstrahls Signalspannung ($U_B$) und zugehörige Entfernung ($R_B$) eines zweiten Stützpunkts im Nahbereich gemessen und in einem Rechner zur weiteren Auswertung gespeichert werden (2-Punkt-Verfahren), dadurch gekennzeichnet, daß zur Bestimmung der Schrägsichtweite eine Zusatzmessung unter verschiedenen Elevationswinkeln erfolgt, um die möglicherweise vorhandene Schichtung der Atmosphäre zu erfassen und dem Rechner entsprechende Meßdaten für eine Korrektur der Berechnung der Schrägsichtweite zuzuführen.

## Revendication

Procédé pour mesurer la distance de visibilité oblique, selon lequel on utilise comme émetteur un laser pulsé et comme récepteur pour les impulsions laser réfléchies par rétrodiffusion sur les aérosols, un dispositif de réception comportant un photodétecteur, et selon lequel on mesure une tension de signal ($U_R$) prédéterminée, dépendant des propriétés des aérosols et la distance associée déterminée à partir du temps de transit des impulsions laser, et on les utilise comme premier point de base, et selon lequel pour déterminer la portée du faisceau laser, on mesure la tension de signal ($U_B$) et la distance associée ($R_B$) d'un second point de base dans la zone rapprochée et on les mémorise dans un calculateur en vue de leur évaluation ultérieure (procédé à 2 points), caractérisé par le fait que pour la détermination de la distance de visibilité oblique, on réalise une mesure supplémentaire sous différents angles d'élévation, afin de détecter la disposition éventuellement présente en couches de l'atmosphère et d'envoyer au calculateur des données de mesure correspondantes pour une correction du calcul de la distance de visibilité oblique.

## Claim

Method of measuring the slant visibility range, in which as transmitter an impulse laser and as receiver for the laser impulses back-scattered at the aerosols a receiving device including a photodetector is used, in which a predetermined signal voltage ($U_R$), dependent on the properties of the aerosols, of received laser impulses and the related distance detected from the propagation time of the laser impulses is measured and used as first reference point and in which for determining the range of the laser beam signal voltage ($U_B$) and related distance ($R_B$) of a second reference point are measured in the neighborhood and stored in a computer for further evaluation (2-point-method), characterized in that for determining the slant visibility range an additional measurement is made under different elevation angles in order to detect possibly provided atmospheric layering and to furnish corresponding measuring data to the computer for correction of the slant visibility range computation.

FIG. 1

FIG. 2a

FIG. 2b

1

FIG. 3

FIG. 4